# EUROPEAN PATENT APPLICATION

(11) **EP 1 156 077 A1**
(43) Date of publication of application: **21.11.2001**
(21) Application number: 00110350.6
(22) Date of filing: 15.05.2000
(51) Int. Cl.: C08J 9/14, C08L 75/04

(54) **Process for making rigid polyurethane foams**

(71) Applicant: HUNTSMAN INTERNATIONAL LLC, Salt Lake City, Utah 84108 (US)
(72) Inventor: The designation of the inventor has not yet been filed
(74) Representative: Swinnen, Anne-Marie

(57) **Abstract**

Process for preparing rigid polyurethane foams using a surfactant composition comprising at least a first moderate surfactant and at least a second weak surfactant according to a weight ratio first:second ranging from 1:25 to 5:1.

## Description

This invention relates to processes for the preparation of rigid polyurethane or urethane-modified polyisocyanurate foams, to foams prepared thereby, and to novel compositions useful in the process.

Rigid polyurethane and urethane-modified polyisocyanurate foams are in general prepared by reacting the appropriate polyisocyanate and isocyanate-reactive compound (usually a polyol) in the presence of a blowing agent. One use of such foams is as a thermal insulation medium as, for example, in the construction of refrigerated storage devices. The thermal insulating properties of rigid foams are dependent upon a number of factors including, for closed cell rigid foams, the cell size and the thermal conductivity of the contents of the cells.

A class of materials which has been widely used as blowing agent in the production of polyurethane and urethane-modified polyisocyanurate foams are the fully halogenated chlorofluorocarbons, and in particular trichlorofluoromethane (CFC-11). The exceptionally low thermal conductivity of these blowing agents, and in particular of CFC-11, has enabled the preparation of rigid foams having very effective insulation properties. Recent concern over the potential of chlorofluorocarbons to cause depletion of ozone in the atmosphere has led to an urgent need to develop reaction systems in which chlorofluorocarbon blowing agents are replaced by alternative materials which are environmentally acceptable and which also produce foams having the necessary properties for the many applications in which they are used.

Such alternative blowing agents proposed in the prior art include hydrochlorofluorocarbons, hydrofluorocarbons and especially hydrocarbons namely alkanes and cycloalkanes such as n-pentane, isopentane, cyclopentane and mixtures thereof.

Surfactants are traditionally used to facilitate foam formation.

US-P-4751251 discloses a surfactant composition for rigid polyurethane foam, including polyisocyanurate foam, comprising by weight from 15% to 50% of each of the following ingredients: (1) a non-siloxane organic surfactant; (2) a siloxane-polyoxyalkylene surfactant and (3) one of water, C1 to C3 alcohol and mixtures thereof.

US-P-5691392 and US-P-5753735 disclose surfactant compositions for rigid polyurethane foam, including polyisocyanurate foam, comprising by weight: (1) from 50% to 98.9% of a siloxane-polyoxyalkylene surfactant, (2) from 1% to 49.9% of a nonionic organic surfactant different from (1), and (3) from 0.1% to 25% of a particulate material.

WO-A-98/42764 discloses monols mixtures, where said monol is a polyoxyethylene polyether based surfactant. This specific mixture is said to improve the hydrocarbon solubility in the foam mixture. A silicone surfactant is used to manufacture the final rigid foam.

Surfactants are thus typically used in combination with the polyisocyanate and isocyanate-reactive compound. Surfactants allow to control cell size distribution and influence the lambda value of the foams. It is generally admitted that a strong surfactant provides finer celled foams with improved thermal performance. However, using a strong surfactant provides the drawback that its compatibility with the isocyanate-reactive composition is low resulting in turbid blends and/or phase separation.

Thus, the invention aims at providing a surfactant composition that allows to obtain fine celled foams with high closed cell content and a low lambda value (i.e. improved thermal performance) whilst maintaining good compatibility with the isocyanate-reactive composition.

Further, the instant surfactant composition improves the solubility of hydrocarbon blowing agents in isocyanate-reactive compositions, particularly in polyether polyol compositions (without detrimentally affecting the insulation and other physical properties of the obtained rigid polyurethane foams).

These objects are met by using in the process of making rigid polyurethane or urethane-modified polyisocyanurate foams from polyisocyanates and isocyanate-reactive components in the presence of blowing agents, a specific surfactant mixture comprising at least a first moderate surfactant and at least a second weak surfactant according to a weight ratio first:second ranging from 1:25 to 5:1, preferably from 1:5 to 1:1.

The instant invention is based on the surprising effect that this combination of surfactants provides a synergistic effect on the Dynamic Surface Tension (DST). This finding is surprising. Indeed, it is generally admitted that the DST values correspond more or less to the value conferred by the strongest surfactant in the mixture. By using the present specific composition, the final DST values are much lower than what would have been expected according to the state of the art. The instant surfactant composition behaves similar to a strong surfactant (low DST values) but without the drawbacks traditionally attached to a strong surfactant.

Dynamic Surface Tension is used to classify the surfactants, from strong to moderate to weak.

The moderate surfactant is a surfactant that decreases the surface tension, especially at long bubble age (in contrast to a strong surfactant that decreases the surface tension, even at short bubble age).
Generally, the moderate surfactant has a DST at 15 sec bubble age from 24 to 28 mN/m, and/or a DST at 0.1 sec bubble age from 30 to 32 mN/m when measured in dipropyleneglycol.

This moderate surfactant is generally a silicone based surfactant. Especially, this moderate surfactant can be a siloxane-polyoxyalkylene copolymer, with a formula as depicted in US-P-4751251, or US-P-5691392 and US-P-5753735, the content of which being incorporated herein by reference. This surfactant exhibits thus the following formula:

SiR"₃-O-(SiMe₂-O)ₓ-(SiMeR-O)_{y}-SiR'''₃

with R being R'O(C₂H₄O)ₘ(C₃H₆O)ₙH, R' being a C3 to C6 alkylene group, R' preferably being -(CH₂)₃-, and R" and R"' being CH₃ or R.
In the above formula, the various values of x, y, R', m and n are chosen so that the final DST values correspond to the ones depicted above for a moderate surfactant.
As a matter of example, x may vary between 1 and 150, preferably 1 and 50, y may vary between 1 and 50, preferably 1 and 20, the ratio x:y may vary from 10:1 to 1:1. Still as a matter of example, m may vary between 5 and 200, preferably 5 and 50, n may vary between 0 and 20.
The molecular weight of the siloxane-polyoxyalkylene surfactant may vary between 6000 to 50,000, while the molecular weight of the pendant R group may vary between 150 to 4000.

Examples of suitable siloxane-polyoxyalkylene surfactants for use in the present invention as the moderate surfactant include the commercially available products L6900 (available from Dow Corning Corporation) and B8461 (available from Goldschmidt Chemical Corporation).

Mixtures of moderate surfactants are also encompassed.

The total amount of the moderate surfactant, e.g. siloxane-polyoxyalkylene surfactant, used in the invention for preparing rigid polyurethane foams is generally between 0.2 and 5 wt%, preferably between 0.5 and 2.5 wt% on the total foam-forming composition.

The weak surfactant is a surfactant that does not decrease substantially the surface tension (or to a small extent).
Generally, the weak surfactant has a DST at 15 sec bubble age above 28 mN/m, and/or a DST at 0.1 sec bubble age above 30 mN/m when measured in dipropyleneglycol.

This weak surfactant is generally a polyoxyethylene polyether based surfactant.
Typically, this surfactant is a polyoxyethylene polyether monol which may be prepared by simple addition of ethylene oxides to an initiator fatty hydrocarbon having one alkylene oxide active hydrogen represented by the general formula R-X wherein R represents a branched or unbranched, saturated or ethylenically unsaturated, aliphatic or alicyclic radical, preferably an aliphatic linear saturated alkyl radical and X represents OH, NRH or SH, preferably OH. Preferably R contains 12 to 15 carbon atoms.
In a preferred embodiment the monol is initiated with a fatty alcohol preferably containing 12 to 15 carbon atoms. The fatty alcohol is preferably a branched or unbranched C₁₂-C₁₅ aliphatic primary or secondary alcohol, most preferably a branched or unbranched C₁₂-C₁₅ alkyl primary alcohol.
As used herein, the designation of a C₁₂-C₁₅ fatty alcohol or any such similar designation includes those instances where the initiator may be composed purely of molecules each having the same number of carbon atoms and the same structure, the same number of carbon atoms but structural isomers or stereoisomers of each other, or a mixture of compounds having different numbers of carbon atoms so long as at least 90 wt% of the molecules in the mixture have carbon chain lengths within the range described above.
Mixtures of fatty alcohols having different numbers of carbon atoms are possible. Preferred are mixtures of C₁₃-C₁₅ fatty alcohols and mixtures of C₁₂-C₁₄ fatty alcohols. It is preferred to use primary fatty alcohols which have a linear structure.

The monols used in the present invention are prepared by adding ethylene oxide onto the initiator molecule.
Generally the amount of ethylene oxide added is sufficient to make a monol having a hydroxyl value in the range 100 to 200 mg KOH/g, preferably in the range 120 to 180, more preferably 140 to 180 mg KOH/g. In general therefore the average total number of ethylene oxide added onto the initiator molecule is from 2 to 5.

The addition of ethylene oxide to make the monols is generally carried out in the presence of an alkaline catalyst. Examples include sodium hydroxide, potassium hydroxide, sodium ethylate, sodium methylate, potassium acetate, sodium acetate and trimethylamine. The reaction is usually carried out at elevated temperatures and pressures. The catalyst may be neutralised with a carboxylic acid.

Examples of suitable polyoxyethylene polyether monols for use in the present invention include the commercially available products Atpol 4743 (C₁₃-C₁₅ fatty alcohol onto which is added an average of 3 moles of ethylene oxide; OH value 160 mg KOH/g), Atpol 4768 (C₁₂-C₁₄ fatty alcohol onto which is added an average of 2 moles of ethylene oxide; OH value 180 mg KOH/g), Atpol 4868 (C₁₃-C₁₅ fatty alcohol onto which is added an average of 5 moles of ethylene oxide; OH value 120 mg KOH/g) and Atpol 4867 (C₁₃-C₁₅ fatty alcohol onto which is added an average of 4 moles of ethylene oxide; OH value 140 mg KOH/g), all available from Uniqema.

Alternatively, the weak surfactant may also be a siloxane-polyoxyalkylene copolymer as disclosed above with respect to the moderate surfactant. In this case, the values of x, y, R', m and n are selected so as to obtain the required DST values.
Examples of suitable siloxane-polyoxyalkylene surfactants for use in the present invention as the weak surfactant include the commercially available products B8461, B8405, B8455, B8423 (available from Goldschmidt Chemical Corporation), Y10762 and SR321 (available from Osi Chemicals incorporated).

Mixtures of weak surfactants are also encompassed (including mixtures of non-silicone surfactants with silicone surfactants).

The total amount of the weak surfactant, e.g. polyoxyethylene polyether monol, used in the invention for making rigid polyurethane foam is generally between 0.5 and 10 wt%, preferably between 1 and 5 wt% on total foam-forming composition.

Suitable isocyanate-reactive compounds to be used in the process of the present invention include any of those known in the art for the preparation of rigid polyurethane or urethane-modified polyisocyanurate foams. Of particular importance for the preparation of rigid foams are polyols and polyol mixtures having average hydroxyl numbers of from 300 to 1000, especially from 300 to 700 mg KOH/g, and hydroxyl functionalities of from 2 to 8, especially from 3 to 8. Suitable polyols have been fully described in the prior art and include reaction products of alkylene oxides, for example ethylene oxide and/or propylene oxide, with initiators containing from 2 to 8 active hydrogen atoms per molecule. Suitable initiators include: polyols, for example glycerol, trimethylolpropane, triethanolamine, pentaerythritol, sorbitol and sucrose; polyamines, for example ethylene diamine, tolylene diamine (TDA), diaminodiphenylmethane (DADPM) and polymethylene polyphenylene polyamines; and aminoalcohols, for example ethanolamine and diethanolamine; and mixtures of such initiators. Other suitable polymeric polyols include polyesters obtained by the condensation of appropriate proportions of glycols and higher functionality polyols with dicarboxylic or polycarboxylic acids. Still further suitable polymeric polyols include hydroxyl terminated polythioethers, polyamides, polyesteramides, polycarbonates, polyacetals, polyolefins and polysiloxanes.

Suitable organic polyisocyanates for use in the process of the present invention include any of those known in the art for the preparation of rigid polyurethane or urethane-modified polyisocyanurate foams, and in particular the aromatic polyisocyanates such as diphenylmethane diisocyanate in the form of its 2,4'-, 2,2'- and 4,4'-isomers and mixtures thereof, the mixtures of diphenylmethane diisocyanates (MDI) and oligomers thereof known in the art as "crude" or polymeric MDI (polymethylene polyphenylene polyisocyanates) having an isocyanate functionality of greater than 2, toluene diisocyanate in the form of its 2,4- and 2,6-isomers and mixtures thereof, 1,5-naphthalene diisocyanate and 1,4-diisocyanatobenzene. Other organic polyisocyanates which may be mentioned include the aliphatic diisocyanates such as isophorone diisocyanate, 1,6-diisocyanatohexane and 4,4'-diisocyanatodicyclohexylmethane.

The quantities of the polyisocyanate compositions and the polyfunctional isocyanate-reactive compositions to be reacted will depend upon the nature of the rigid polyurethane or urethane-modified polyisocyanurate foam to be produced and will be readily determined by those skilled in the art.

Any of the physical blowing agents known for the production of rigid polyurethane foam can be used in the process of the present invention. Examples of these include dialkyl ethers, cycloalkylene ethers and ketones, fluorinated ethers, chlorofluorocarbons, perfluorinated hydrocarbons, hydrochlorofluorocarbons, hydrofluorocarbons, and in particular hydrocarbons.
Examples of suitable hydrochlorofluorocarbons include 1-chloro-1,2-difluoroethane, 1-chloro-2,2-difluoroethane, 1-chloro-1,1-difluoroethane, 1,1-dichloro-1-fluoroethane and monochlorodifluoromethane.
Examples of suitable hydrofluorocarbons include 1,1,1,2-tetrafluoroethane, 1,1,2,2-tetrafluoroethane, trifluoromethane, heptafluoropropane, 1,1,1-trifluoroethane, 1,1,2-trifluoroethane, 1,1,1,2,2-pentafluoropropane, 1,1,1,3-tetrafluoropropane, 1,1,1,3,3-pentafluoropropane and 1,1,1,3,3-pentafluoro-n-butane.

Suitable hydrocarbon blowing agents include lower aliphatic or cyclic, linear or branched hydrocarbons such as alkanes, alkenes and cycloalkanes, preferably having from 4 to 8 carbon atoms. Specific examples include n-butane, iso-butane, 2,3-dimethylbutane, cyclobutane, n-pentane, iso-pentane, technical grade pentane mixtures, cyclopentane, methylcyclopentane, neopentane, n-hexane, iso-hexane, n-heptane, iso-heptane, cyclohexane, methylcyclohexane, 1-pentene, 2-methylbutene, 3-methylbutene, 1-hexene and any mixture of the above. Preferred hydrocarbons are n-butane, iso-butane, cyclopentane, n-pentane and isopentane and any mixture thereof, in particular mixtures of n-pentane and isopentane (preferred weight ratio 3:8), mixtures of cyclopentane and isobutane (preferred weight ratio 8:3), mixtures of cyclopentane and n-butane and mixtures of cyclopentane and iso- or n-pentane (preferred weight ratio between 6:4 and 8:2).

Generally water or other carbon dioxide-evolving compounds are used together with the physical blowing agents. Where water is used as chemical co-blowing agent typical amounts are in the range from 0.2 to 5 %, preferably from 0.5 to 3 % by weight based on the isocyanate-reactive compound.

The total quantity of blowing agent to be used in a reaction system for producing cellular polymeric materials will be readily determined by those skilled in the art, but will typically be from 2 to 25 % by weight based on the total reaction system.

In addition to the polyisocyanate and polyfunctional isocyanate-reactive compositions and the blowing agents, the foam-forming reaction mixture will commonly contain one or more other auxiliaries or additives conventional to formulations for the production of rigid polyurethane and urethane-modified polyisocyanurate foams. Such optional additives include crosslinking agents, for examples low molecular weight polyols such as triethanolamine, urethane catalysts, for example tin compounds such as stannous octoate or dibutyltin dilaurate or tertiary amines such as dimethylcyclohexylamine or triethylene diamine, isocyanurate catalysts, fire retardants, for example halogenated alkyl phosphates such as tris chloropropyl phosphate, and fillers such as carbon black.

In operating the process for making rigid foams according to the invention, the known one-shot, prepolymer or semi-prepolymer techniques may be used together with conventional mixing methods and the rigid foam may be produced in the form of slabstock, mouldings, cavity fillings, sprayed foam, frothed foam or laminates with other materials such as hardboard, plasterboard, plastics, paper or metal.

It is convenient in many applications to provide the components for polyurethane production in pre-blended formulations based on each of the primary polyisocyanate and isocyanate-reactive components. In particular, many reaction systems employ a polyisocyanate-reactive composition which contains the major additives such as the blowing agent, the catalyst and the surfactant in addition to the polyisocyanate-reactive component or components.

Therefore the present invention also provides a polyisocyanate-reactive composition comprising the present mixture of surfactants.

The various aspects of this invention are illustrated, but not limited by the following examples.

The following reaction components are referred to in the examples:
- Atpol 4768:: A polyethylene polyether monol initiated with C₁₂-C₁₄ fatty alcohol onto which is added an average of 2 moles of ethylene oxide; OH value 180 mg KOH/g, available from Uniqema.
- Atpol 4868:: A polyethylene polyether monol initiated with C₁₃-C₁₅ fatty alcohol onto which is added an average of 5 moles of ethylene oxide; OH value 120 mg KOH/g, available from Uniqema.
- L6910:: A polydimethylsiloxane based surfactant, available from Dow Corning Corporation
- B8467:: A polydimethylsiloxane based surfactant, available from Goldschmidt Chemical Corporation
- L6900:: A polydimethylsiloxane based surfactant, available from Dow Corning Corporation
- B8461:: A polydimethylsiloxane based surfactant, available from Goldschmidt Chemical Corporation
- SR321:: A polydimethylsiloxane based surfactant, available from OSi Chemicals Incorporated
- B8405:: A polydimethylsiloxane based surfactant, available from Goldschmidt Chemical Corporation
- B8455:: A polydimethylsiloxane based surfactant, available from Goldschmidt Chemical Corporation
- B8423:: A polydimethylsiloxane based surfactant, available from Goldschmidt Chemical Corporation
- Y10762:: A polydimethylsiloxane based surfactant, available from Osi Chemicals Incorporated

- DALTOLAC R130:: A polyether polyol of OH value 460 mg KOH/g, available from Huntsman Polyurethanes
- DALTOLAC XR159:: A polyether polyol of OH value 500 mg KOH/g, available from Huntsman Polyurethanes
- DALTOLAC R145:: A polyether polyol of OH value 310 mg KOH/g, available from Huntsman Polyurethanes
- DALTOLAC R190:: A polyether polyol of OH value 555 mg KOH/g, available from Huntsman Polyurethanes

- DMCHA:: An amine catalyst, available from Huntsman Polyurethanes
- DMBA:: An amine catalyst, available from Huntsman Polyurethanes
- Niax A1:: An amine catalyst, available from Union Carbide

- SUPRASEC DNR:: Polymeric isocyanate of NCO value 32 wt%, available from Huntsman Polyurethanes

DALTOLAC and SUPRASEC are trademarks from Huntsman ICI Chemicals LLC.

### EXAMPLE 1: DST Measurements

Surfactants are mixed with dipropyleneglycol in a thermostated cell at different concentrations. The temperature of the cell was controlled at 30°C. The concentrations were 0.3 %, 0.5 % and 1 % by weight for silicone based surfactants and 0.5 %, 1 % and 2 % by weight for non-silicone based surfactants. For the mixtures of surfactants, a concentration of 0.5 % of each was used, in order to obtain a total concentration of 1 %; alternatively a 0.5/2 mixture of silicone/non-silicone was used. Two capillaries plunged in the surfactant solution were supplied with nitrogen in order to generate bubbles. The orifice diameters of these capillaries were 0.5 mm and 0.2 mm. They generated bubbles at different bubble frequencies and the difference between the maximum pressures measured inside both bubbles was converted into surface tension using the calibration constant determined by a calibration test with pure dipropyleneglycol. The range of bubble frequencies was increased from 0.05 Hz to 20 Hz in order to have a range of bubble ages from 20 s to 0.05 s.

The results are summarized in the table below. Between parenthesis is given the arithmetic sum calculated from the values for the pure components.

**Table 1**

| | DST (mN/m) at 0.1s | arithm. sum | DST (mN/m) at 15s | arithm. sum |
|---|---|---|---|---|
| Strong Surfactant | | | | |
| L6910 | 28.4 | | 19.5 | |
| B8467 | 29.5 | | 19.9 | |

| Moderate Surfactant | | | | |
|---|---|---|---|---|
| L6900 | 31.5 | | 25.3* | |
| B8461 | 30.2 | | 25.1 | |

| Weak Surfactant | | | | |
|---|---|---|---|---|
| SR321 | 30.6 | | 27.7 | |
| B8405 | 30.9 | | 27.9 | |
| B8455 | 30.9 | | 28.9 | |
| Atpol 4868 | 30.9 | | 30.6 | |
| Atpol 4878 | 33.2 | | 32.9 | |
| B8423 | 37.2 | | 32.9 | |
| Y10762 | 32.9 | | 30.8 | |

| Mixtures of Surfactants | | | | |
|---|---|---|---|---|
| L6910+B8461 | 29.6 | 29.3 | 21.6 | 22.3 |
| L6910+Atpo14868 | 31.6 | 29.7 | 21.5 | 25.1 |
| B8467+SR321 | 30.3 | 30.1 | 22.6 | 23.8 |
| B8467+Y10762 | 31.4 | 31.2 | 23 | 25.4 |
| L6900+SR321 | 29.3 | 31.1 | 22.9 | 26.5 |
| L6900+Atpo14868 | 29.8 | 31.2 | 21.8 | 28.0 |
| B8423+L6900+Atpo1486 8+Atpo14768 (0.5/0.5/1.4/0.6) | 29.1 | 33.2 | 22.1 | 30.4 |

| | | | | |
|---|---|---|---|---|
| * at 4 s | | | | |

The synergistic effect is apparent from the results shown in the above table. Indeed, mixtures L6900+SR321, L6900+Atpo14868 and B8423+L6900+Atpo14868+Atpo14768 exhibit DST values that are far below the arithmetic sum. The DST values of these mixtures are close to those of a strong surfactant.

### EXAMPLE 2: Foam characteristics

A foam is produced from the following ingredients:

**Table 2**

| Component | part by weight |
|---|---|
| DALTOLAC R130 | 34.7 |
| DALTOLAC XR159 | 18.0 |
| DALTOLAC R145 | 19.5 |
| DALTOLAC R190 | 19.7 |
| DMCHA | 1.5 |
| Niax A1 | 0.2 |
| DMBA | 2 |
| water | 2.2 |
| Surfactant | See below in table |
| Cyclopentane/Isopentane 60/40 | 14 |
| SUPRASEC DNR | 145.1 |

A foam is produced according to a conventional process, resulting in 5 % overpack blocks. The thermal conductivity was measured following the standard DIN 53421. The closed cell content (CCC) was measured with Accupyc Pycnometer. The isotropic cell size was evaluated by SEM.

The results are summarized in the table below. The value in parenthesis is the amount in part by weight of the surfactant.

**Table 3**

| Surfactant | CCC | lambda (mW/m.K) | cell size (µm) |
|---|---|---|---|
| B8423 (0.5) | 89 | 23.75 | 483 |
| L6910 (0.5) | 88 | 21.97 | 353 |
| L6910+Atpol 4768 (0.5/2) | 88 | 21.99 | 353 |
| B8423+L6900+Atpo14868+ Atpo14768 (0.5/0.5/1.4/0.6) | 92 | 21.38 | 305 |

The synergistic effect of the mixtures of the invention appear also from this table, which shows that (i) the lambda is decreased, (ii) the closed cell content is increased and (iii) the cells are finer.

## Claims

1. Surfactant composition comprising at least a first moderate surfactant and at least a second weak surfactant according to a weight ratio first moderate surfactant:second weak surfactant ranging from 1:25 to 5:1.

2. Surfactant composition according to claim 1, wherein said weight ratio first moderate surfactant:second weak surfactant is ranging from 1:5 to 1:1.

3. Surfactant composition according to claim 1 or 2, wherein said first moderate surfactant has a DST at 15 sec bubble age from 24 to 28 mN/m when measured in dipropyleneglycol.

4. Surfactant composition according to any one of claims 1 to 3, wherein said first moderate surfactant has a DST at 0.1 sec bubble age from 30 to 32 mN/m when measured in dipropyleneglycol.

5. Surfactant composition according to any one of claims 1 to 4, wherein said second weak surfactant has a DST at 15 sec bubble age above 28 mN/m when measured in dipropyleneglycol.

6. Surfactant composition according to any one of claims 1 to 5, wherein said second weak surfactant has a DST at 0.1 sec bubble age above 30 mN/m when measured in dipropyleneglycol.

7. Surfactant composition according to any one of claims 1 to 6, wherein said first moderate surfactant is at least one siloxane-polyoxyalkylene surfactant.

8. Surfactant composition according to any one of claims 1 to 7, wherein said second weak surfactant is at least one polyoxyethylene polyether surfactant.

9. Surfactant composition according to any one of claims 1 to 7, wherein said second weak surfactant is at least one siloxane-polyoxyalkylene surfactant.

10. Surfactant composition according to any one of claims 1 to 7, wherein said second weak surfactant is a mixture of at least one polyoxyethylene polyether surfactant and at least one siloxane-polyoxyalkylene surfactant.

11. Process for preparing rigid polyurethane or urethane-modified polyisocyanurate foam comprising the step of reacting an organic polyisocyanate with a polyfunctional isocyanate-reactive component in the presence of at least one blowing agent and in the presence of the surfactant composition as defined in any one of claims 1 to 10.

12. Process according to claim 11 wherein the blowing agent is a hydrocarbon.

13. Process according to claim 11 or 12 wherein the amount of the first moderate surfactant is between 0.2 and 5 wt% on the total foam-forming composition.

14. Process according to any one of claims 11 tor 13 wherein the amount of the second weak surfactant is between 0.5 and 10 wt% on the total foam-forming composition.

15. Rigid polyurethane or urethane-modified polyisocyanurate foam obtainable by the process as defined in any one of claims 11 to 14.

16. Polyfunctional isocyanate-reactive composition comprising the surfactant composition as defined in any one of claims 1 to 10.
